(19) Europäisches Patentamt

European Patent Office

Office européen des brevets

(11) Veröffentlichungsnummer: **0 316 517 B1**

(12) **EUROPÄISCHE PATENTSCHRIFT**

(45) Veröffentlichungstag der Patentschrift: **24.03.93**

(21) Anmeldenummer: **88113047.0**

(22) Anmeldetag: **11.08.88**

(51) Int. Cl.⁵: **B22C 1/00**, C08G 8/10, C08L 61/06

(54) Hitzehärtendes Bindemittel und seine Verwendung.

(30) Priorität: **17.11.87 DE 3738902**

(43) Veröffentlichungstag der Anmeldung:
**24.05.89 Patentblatt 89/21**

(45) Bekanntmachung des Hinweises auf die
Patenterteilung:
**24.03.93 Patentblatt 93/12**

(84) Benannte Vertragsstaaten:
**AT BE CH DE ES FR GB GR IT LI LU NL SE**

(56) Entgegenhaltungen:
**EP-A- 0 139 309**
**DE-A- 3 423 878**

**PATENT ABSTRACTS OF JAPAN, Band 8, Nr.
85 (C-219) (1522), 18 April 1984; & JP-A-59
6208**

**PATENT ABSTRACTS OF JAPAN, Band 5, Nr.
45 (C-48) (717), 25 März 1981; & JP-A-55 165
943**

**A. KNOP et al.: "CHEMISTRY AND APPLICA-
TION OF PHENOLIC RESINS", 1979, Springer
Verlag, Berlin**

**Derwent Abstracts, Band 84, Nr. 84-227305
(37), Derwent Publications Ltd, London, G.B.,
1984**

(73) Patentinhaber: **RÜTGERSWERKE AKTIENGE-
SELLSCHAFT**
**Mainzer Landstrasse 217**
**W-6000 Frankfurt am Main 1(DE)**

(72) Erfinder: **Gardziella, Arno, Dr.**
**Rüdinghauser Berg 4**
**W-5810 Witten-Rüdinghausen(DE)**
Erfinder: **Kwasniok, Alois, Dipl.-Ing.**
**Vor dem Hopey**
**W-5860 Iserlohn(DE)**

**Beschreibung**

Die Erfindung betrifft ein neues Bindemittel auf der Basis eines hitzehärtenden Phenolharzes und einer Härterkomponente.

Derartige Harzsysteme finden Verwendung als Bindemittel für Gießereisand für die Herstellung von Gießereiformstoffen. Dazu wird der mit dem Bindemittel vermischte Sand in die gewünschte Form gebracht und das Bindemittel gehärtet.

Die Härtung von Gießereiformstoffen erfolgt entweder durch Begasen mit einem die Härtung auslösenden Gas (z. B. Cold-Box-Verfahren) oder durch Erhitzen auf 200-300 ° C (z. B. Hot-Box-Verfahren). Beide Verfahrenstypen - Kältehärtung und Heißhärtung - haben jeweils charakteristische Vor- und Nachteile und sind an unterschiedlich vorgegebene maschinelle Einrichtungen gebunden, die im allgemeinen verfahrensspezifisch sind. Bei bisher bekannten heißhärtenden Systemen werden folgende Nachteile deutlich:

Das Hot-Box-Verfahren mit Phenolresol als Harz und Säurehärtern als Zusatze führt insbesondere im Sommer zu kurzen Verarbeitungszeiten des Kernsandes. Darüberhinaus verschmutzen die Fertigungseinrichtungen zu schnell und die Geruchsbelästigung kann relativ stark sein (z. B. Formaldehydemission).

Bindemittelsysteme mit Novolak und Hexamethylentetramin zeigen zwar keine Verarbeitungsprobleme, benötigen jedoch unter den Bedingungen des Hot-Box-Verfahrens relativ lange Härtungszeiten, um beim Abguß eine fehlerfreie Gußqualität zu erzielen.

Der Einsatz von speziellen Resolen, die mit Hexamethylentetramin gehärtet werden (z. B. gemäß DE 34 23 878 A1) führt zwar zu guter Lagerfähigkeit des Sandes und zu befriedigenden Härtungszeiten, jedoch ist das thermische Verhalten der Formstoffe beim Abguß schlecht. Es entsteht eine gewisse Thermoplastizität, die zu erheblichen Gußfehlern führen kann.

Ein kalthärtendes Bindemittelsystem ist aus JP-A 59-6208 bekannt. Dabei wird eine Dispersion eines Resols durch aminische oder ammoniakalisch katalysierte Kondensation von Phenol und Formaldehyd in Gegenwart eines wasserlöslichen, hochmolekularen Polymeren hergestellt. Das Resol wird durch Zugabe von Säuren gehärtet. Dieses System ist zur Herstellung von Aktivkohle oder anderem Adsorptionsmaterial geeignet, jedoch nicht als Gießereibindemittel.

Es war daher die Aufgabe der Erfindung, ein Gießereibindemittel bereitzustellen, das mit Sand eine gut lagerfähige Mischung ergibt, die sich in der Hitze schnell und gut durchhärten härten läßt und ein gutes thermisches Verhalten der Kerne und Formen beim Abguß ermöglicht.

Darüberhinaus ist es eine weitere Aufgabe der Erfindung, daß die durch das Bindemittel bedingten Emissionsprobleme möglichst gering sind, d. h., daß der Anteil an freiem Phenol weniger als 5 % beträgt und keine den MAK-Wert überschreitende Formaldehydemission entsteht.

Die Lösung der Aufgabe erfolgt durch ein Bindemittel gemäß den Ansprüchen 1 bis 10 und seine Verwendung gemäß Anspruch 11.

Es wurde gefunden, daß ein Bindemittel aus einem Phenolresol mit einem Phenol-Formaldehyd-Verhältnis von 1:1-2 und einem Härtergemisch aus Hexamethylentetramin und einem sauren, latenten Härtungsmittel die gestellte Aufgabe löst und sich daher bestens als Bindemittel zur heißen Herstellung von Kernen und Formen gemäß den o. g. Anforderungen im Gießereisektor eignet.

Das erfindungsgemäße Bindemittel besteht somit aus einem speziellen Phenolharz und einem Härtergemisch.

Als Phenolharz ist jedes alkalisch kondensierte Kondensationsprodukt aus einem Phenol und Formaldehyd oder einer unter Kondensationsbedingungen Formaldehyd abspaltenden Substanz geeignet, sofern das molare Verhältnis von eingesetzter phenolischer Verbindung : Formaldehyd im Bereich von 1 : 1 bis 1 : 2 liegt. Bevorzugt werden Bindemittel, deren phenolischer Monomeranteil weniger als 5 % beträgt.

Phenolische Verbindungen, die sich zu erfindungsgemäß verwendbaren Phenolresolen kondensieren lassen, sind Phenol selbst, Kresole, Xylenole, Naphthole oder auch mehrwertige Phenole wie z. B. Brenzcatechin, Resorcin, Hydrochinon oder Bisphenole und zwar sowohl die reinen Verbindungen als auch Gemische dieser Phenole miteinander.

Den erfindungsgemäßen Bindemitteln werden bei der Form-und Kernsandherstellung 5 - 25 Gew.- %, bezogen auf Phenol, einer Härterkomponente zugesetzt. Diese ist ein Gemisch aus Hexamethylentetramin und einem sauren Härtungsmittel im Gewichtsverhältnis von 30 : 1 bis 1 : 2, bevorzugt von 10 : 1 bis 1 : 1. Durch diese Kombination zweier in ihrem Härtungsmechanismus grundverschiedener Härtungsmitteltypen werden die geforderten Eigenschaften des Bindemittels im gehärteten Zustand erzielt. Saure, latente Härtungsmittel sind solche sauren Substanzen, die im Gemisch mit Phenolresolen bei Raumtemperatur nicht oder nur sehr langsam, bei höherer Temperatur aber sehr schnell zu einer Härtung führen.

Derartige saure, latente Härtungsmittel sind Addukte von starken anorganischen oder organischen Säuren mit einer oder mehreren schwach basischen oder polaren Substanzen wie z. B. Harnstoff, Hydroxyethylanilin, Polyolen oder Hydroxypolyestern aber auch Salze aus starken anorganischen oder organischen Säuren und schwachen Basen, insbesondere Schwermetallsalze von aromatischen Sulfonsäuren.

Beispiele für bevorzugte saure, latente Härtungsmittel sind Addukte von Harnstoff, Hydroxyethylanilin oder Harnstoff-Hydroxyethylanilin-Gemischen mit Schwefel-, Phosphor-, Benzol-, oder Toluolsulfonsäure, Addukte von Benzol-, Phenol-, oder Toluolsulfonsäuren mit Polyolen oder Hydroxypolyestern sowie Ammoniumnitrat, -sulfat oder -hydrogenphosphat, Aluminium-, Magnesium-, Zink- oder Kupfersalze von Sulfonsäuren wie z. B. Benzol-, Phenol- oder Toluolsulfonsäuren.

Saure, latente Härtungsmittel und Hexamethylentetramin werden entweder miteinander vorgemischt oder getrennt dem Sand zugegeben. Die Zugabe des Phenolresols, das meist in wässriger Lösung vorliegt, zur Sandmischung erfolgt im allgemeinen nach der Zugabe der Härtungsmittel.

Die Gesamtmenge Bindemittel und Härtungsmittel im Formsand beträgt im allgemeinen 1 - 3 %. Aus dem Formsand werden Kerne und Formteile geformt und bei Temperaturen im Bereich von ca. 150 - 300 ° C innerhalb weniger Sekunden gehärtet. Die so hergestellten Gießereiformkörper zeigen beim Abguß ein gutes thermisches Verhalten und sind für alle Gußarten geeignet.

Nachfolgend wird die Erfindung anhand von Ausführungsbeispielen näher erläutert:

Beispiele

Gemäß der Beispiele 1 und 2 wurden unterschiedliche Phenolharze hergestellt.

Das Harz nach Beispiel 1 wurde in Kombination mit den in den Beispielen 3 - 7 aufgeführten Härtungsmitteln als Bindemittel zur Herstellung von Formstoffen eingesetzt.

Entsprechend wurde das Harz nach Beispiel 2 in Kombination mit den in den Beispielen 8 - 12 aufgeführten Härtungsmitteln als Bindemittel zur Herstellung von Formstoffen eingesetzt. Dabei wurden Formstoffmischungen mit jeweils 2 % Phenolharz, bezogen auf die Menge an Sand, hergestellt. In einem Flügelmischer wurden dem Quarzsand (Typ H 33 von Quarzwerke Haltern) das Hexamethylentetramin, das Härtungsmittel und zum Schluß das Phenolharz zugegeben. Mischzeit der einzelnen Komponenten jeweils 1 min.

An den Formstoffmischungen wurden folgende Prüfungen durchgeführt:

1. Verarbeitbarkeitszeit "bench-life"

2. Kalt- und Heißzugfestigkeiten

3. Wärmebeständigkeit "hot distortion"

4. Von den Mischungen gemäß den Beispielen 10 und 11 sowie 13 - 15 wurden Kerne gefertigt und nach Abgießen das thermische Verhalten ermittelt.

Die Ergebnisse sind in der beiliegenden Tabelle zusammengefaßt. Aus der Tabelle geht deutlich der Vorteil der erfindungsgemäßen Bindemittel-Härter-Kombination hervor.

Erläuterungen zu den Prüfungen gemäß 1 - 4:

1. Verarbeitbarkeitszeit ("bench-life")

Die feuchte Formstoffmischung wurde bei Raumtemperatur eingelagert. In gewissen Zeitabständen wurde die Verformbarkeit gemäß Pkt. 2 geprüft. Das bench life war überschritten, wenn die Festigkeiten gegenüber der früheren Mischung um 10 - 15 % abgefallen waren.

2. Kalt- und Heißzugfestigkeit

Die Formstoffmischungen wurden in einer Labor-Kernschießmaschine mit 5 bar Schießdruck bei 230 ° C während 1, 2 und 3 min Standzeit zu Probekörpern (165 x 22,5 x 22,5 min) verarbeitet. Die Heißbiegefestigkeit wurde sofort nach Entnahme aus dem Werkzeug, die Kaltbiegefestigkeit nach Erkalten (frühestens 1 h nach Entnahme) bestimmt.

3. Wärmebeständigkeit

Für die Prüfung der Wärmebeständigkeit wurde der von der British Cast Iron Research Association entwickelte Hot-distortion-Tester eingesetzt. Dabei wird der vorgegebene Prüfkörper (Härtungsbedingungen: 230 ° C, 3 min) an einem Ende eingespannt, am anderen, freien Ende mit einem Meßfühler beaufschlagt und im mittleren Bereich mittels eines Gasbrenners erhitzt. Zunächst erfolgt eine Auslenkung des freien Endes des Prüfkörpers nach oben, danach senkt es sich auf die Ausgangsposition zurück bzw. auf eine Position unterhalb dieser. Mit fortschreitender Erhitzung erfolgt der Bruch des Prüfkörpers. Der Zeitpunkt und der Grad der Absenkung sind ein Maß für die thermische Beständigkeit des Prüfkörpers. Diese ist umso besser, je später und je geringer die Absenkung erfolgt.

Gearbeitet wurde mit einem Vorschub von 50 mm/min.

In der Tabelle sind 2 Werte angegeben. Der erste gibt die höchste Auslenkung nach oben in Diagrammeinheiten und der zweite den Zeitpunkt der Rückkehr zu Ausgangsposition in s an. Bei den erfindungsgemäßen Beispielen 3 - 7 und 8 - 12 sowie dem Vergleichsbeispiel 14 tritt eine wesentlich spätere Verformung auf, bei den Vergleichsbeispielen 13 und 15 eine sehr frühe.

4. Abgußergebnis

Es wurden in der Praxis verformungsempfindliche Teile (Kurbelraumkerne) hergestellt und abgegossen. Danach wurde die Maßabweichung gemessen.

Beurteilung:

1 = Maßabweichung +/- 0,5 mm, einwandfrei

2 = Maßabweichung 2 mm

3 = Maßabweichung 4 mm und mehr.

Beispiel 1

In einer zur Herstellung von Kondensationsharzen üblichen Anlage wurden 3900 kg Phenol, 3766 kg 45%iges Formalin und 65 kg 50%ige Natronlauge auf 50 °C erwärmt und bei 48 - 50 °C reagiert bis der Gehalt an freiem Formaldehyd ca. 0,4 % betrug. Nach Abkühlen wurde mit Säure (z. B. p-Toluolsulfonsäure) auf einen pH-Wert von 8,0 - 8,5 eingestellt und im Vakuum auf eine Viskosität von 300 - 400 mPa.s ausdestilliert.

Es resultierte ein Produkt mit einem Gehalt an Nichtflüchtigen (bei 135 °C) nach DIN 16916 Teil 2 von 68 - 70 % und einem Gehalt an freiem Phenol von ca. 4,5 %.

Beispiel 2

Die in Beispiel 1 beschriebene Arbeitsweise wurde dahingehend geändert, daß in der Kondensationsanlage 3900 kg Phenol, 5017 kg 45%iges Formalin und 177 kg 50%ige Natronlauge vorgelegt wurden. Das Gemisch wurde bei 60 °C während 1 - 2 h bis zum Abklingen der exothermen Reaktion gehalten und danach bei 80 °C bis auf einen Gehalt an freiem Formaldehyd von 0,9 - 1,0 % kondensiert. Nach Neutralisation wurde unter Vakuum bis auf eine Viskosität von 400 - 700 mPa.s ausdestilliert. Es resultierte ein Harz mit einem Festkörpergehalt von 70 % und einem Gehalt an freiem Phenol von 3,0 - 3,5 %.

Beispiel 3

100 Gewichtsteile Harz aus Beispiel 1 mit 5 Gewichtsteilen Hexamethylentetramin und 6 Gewichtsteilen einer 50%igen wäßrigen Lösung des Aluminiumsalzes der p-Phenolsulfonsäure.

Beispiel 4

100 Gewichtsteile Harz aus Beispiel 1 mit 6 Gewichtsteilen Hexamethylentetramin und 8 Gewichtsteilen einer 45%igen Lösung des Kupfersalzes der p-Toluolsulfonsäure.

Beispiel 5

100 Gewichtsteile Harz aus Beispiel 1 mit 9 Gewichtsteilen Hexamethylentetramin und 3 Gewichtsteilen einer 42%igen Lösung des Addukts aus Harnstoff und p-Phenolsulfonsäure.

Beispiel 6

100 Gewichtsteile Harz aus Beispiel 1 mit 10 Gewichtsteilen Hexamethylentetramin und 5 Gewichtsteilen einer 50%igen wäßrigen Lösung des Umsetzungsproduktes aus Harnstoff, Schwefelsäure und Oxethylanilin.

Beispiel 7

100 Gewichtsteile Harz aus Beispiel 1 mit 5 Gewichtsteilen Hexamethylentetramin und 10 Gewichtsteilen einer 50%igen wäßrigen Lösung von Ammoniumnitrat.

Beispiel 8

100 Gewichtsteile Harz aus Beispiel 2 mit 4,5 Gewichtsteilen Hexamethylentetramin und 4,5 Gewichtsteilen einer 50%igen wäßrigen Lösung des Aluminiumsalzes der p-Phenolsulfonsäure.

Beispiel 9

100 Gewichtsteile Harz aus Beispiel 2 mit 9 Gewichtsteilen Hexamethylentetramin und 2,5 Gewichtsteilen einer 45%igen wäßrigen Lösung des Cu-Salzes der p-Toluolsulfonsäure.

Beispiel 10

100 Gewichtsteile Harz aus Beispiel 2 mit 10 Gewichtsteilen Hexamethylentetramin und 5 Gewichtsteilen einer 42%igen wäßrigen Lösung des Umsetzungsproduktes aus Harnstoff und p-Phenolsulfonsäure.

Beispiel 11

100 Gewichtsteile Harz aus Beispiel 2 mit 8 Gewichtsteilen Hexamethylentetramin und 4 Gewichtsteilen einer 50%igen wäßrigen Lösung des Umsetzungsproduktes aus Harnstoff, Schwefelsäure und Oxethylanilin.

Beispiel 12

100 Gewichtsteile Harz aus Beispiel 2 mit 9 Gewichtsteilen Hexamethylentetramin und 12 Gewichtsteilen einer 50%igen wäßrigen Lösung von Ammoniumnitrat.

Beispiel 13 (Vergleichsbeispiel)

100 Gewichtsteile aus Beispiel 2 mit 15 Gewichtsteilen Hexamethylentetramin.

Beispiel 14 (Vergleichsbeispiel)

100 Gewichtsteile eines marktgängigen Hot-Box-Harzes (70%iges Phenolresol, wie z. B. Bakelite-Harz 8586 GH) und 25 Gewichtsteile des dazugehörigen handelsüblichen Härters (Bakelite 8587 H).

Beispiel 15 (Vergleichsbeispiel)

100 Gewichtsteile Harz aus Beispiel 5 der Patentanmeldung DE 34 23 878 mit 15 Gewichtsteilen Hexamethylentetramin.

Die nachfolgende Tabelle zeigt die erhaltenen Ergebnisse:

Tabelle

| Beispiel | bench life | Kaltbiegefestigkeit in N/cm² nach (Härtezeit) | | | Heißbiegefestigkeit in N/cm² nach (Härtezeit) | | | Hot distortion höchster Anschlag (cm) | Wieder-erreichen der Null-Linie (s) | Abguß-Ergebnis |
|---|---|---|---|---|---|---|---|---|---|---|
| | | 1 min | 2 min | 3 min | 1 min | 2 min | 3 min | | | |
| 3 | 28 d | 360 | 600 | 670 | 190 | 330 | 420 | 2,4 | 102 | - |
| 4 | 28 d | 340 | 590 | 690 | 200 | 350 | 440 | 2,9 | 90 | - |
| 5 | 21 d | 350 | 680 | 740 | 190 | 370 | 430 | 2,2 | 96 | - |
| 6 | 21 d | 400 | 780 | 820 | 200 | 460 | 490 | 2,8 | 150 | - |
| 7 | 28 d | 470 | 610 | 630 | 220 | 340 | 410 | 3,6 | 114 | - |
| 8 | 28 d | 370 | 660 | 690 | 190 | 360 | 470 | 2,3 | 78 | - |
| 9 | 21 d | 340 | 680 | 710 | 190 | 370 | 490 | 2,3 | 72 | - |
| 10 | 21 d | 380 | 700 | 700 | 210 | 380 | 480 | 2,2 | 118 | 1 |
| 11 | 21 d | 350 | 750 | 800 | 230 | 490 | 540 | 2,5 | 118 | 1 |
| 12 | 28 d | 450 | 600 | 650 | 190 | 390 | 440 | 2,6 | 102 | - |
| 13 | 42 d | 650 | 690 | 740 | 270 | 400 | 460 | 1,8 | 37 | 2 |
| 14 | 2-4 h | 630 | 690 | 770 | 215 | 340 | 390 | 2,3 | 138 | 1 |
| 15 | 56 d | 550 | 600 | 620 | 220 | 340 | 400 | 1,5 | 30 | 3 |

6

## Patentansprüche

1. Hitzehärtbares Bindemittel aus Phenolharz und Härterkomponente, **dadurch gekennzeichnet,** daß das Phenolharz ein Phenolresol ist mit einem molaren Verhältnis von phenolischer Verbindungen : Formaldehyd von 1:1-2 und der Härter ein Gemisch ist aus Hexamethylentetramin und einem sauren, latenten Härtungsmittel.

2. Bindemittel nach Anspruch 1, **dadurch gekennzeichnet,** daß 5-25 Gew.%, bezogen auf den Harzgehalt, Härterkomponente sind.

3. Bindemittel nach den Ansprüchen 1 und 2, **dadurch gekennzeichnet,** daß das Verhältnis Hexamethylentetramin : saurem, latentem Härtungsmittel im Bereich von 30:1 bis 1:2 liegt.

4. Bindemittel nach den Ansprüchen 1 bis 3, **dadurch gekennzeichnet,** daß das saure, latente Härtungsmittel ein Addukt aus einer starken Säure und Harnstoff ist.

5. Bindemittel nach Anspruch 4, **dadurch gekennzeichnet,** daß das saure, latente Härtungsmittel ein Addukt aus einer starken Säure und Hydroxyethylanilin ist.

6. Bindemittel nach den Ansprüchen 1 bis 3, **dadurch gekennzeichnet,** daß das saure, latente Härtungsmittel ein Salz aus einer starken Säure und einer schwachen Base ist.

7. Bindemittel nach den Ansprüchen 1 bis 3, **dadurch gekennzeichnet,** daß das saure, latente Härtungsmittel ein Schwermetallsalz einer aromatischen Sulfonsäure ist.

8. Bindemittel nach den Ansprüchen 1 bis 3, **dadurch gekennzeichnet,** daß das saure, latente Härtungsmittel ein Polyol und/oder einen Hydroxypolyester enthält.

9. Bindemittel nach den Ansprüchen 1 bis 3, **dadurch gekennzeichnet,** daß das saure, latente Härtungsmittel ein Addukt aus einer starken anorganischen oder organischen Säure und einem Polyol und/oder einem Hydroxypolyester ist.

10. Bindemittel nach den Ansprüchen 1 und 2, **dadurch gekennzeichnet,** daß das Phenolresol einen Gehalt an freien Phenolischen Verbindungen von weniger als 5 % hat.

11. Verwendung der Bindemittel nach den Ansprüchen 1 bis 10 zur Herstellung von Kernen und Formen im Gießereisektor.

## Claims

1. A heat-hardening binder consisting of phenol resin and hardener component, characterized in that the phenol resin is a phenol resol with a molar ratio of phenol compounds to formaldehyde of 1 : 1-2 and the hardener is a mixture of hexamethylenetetramine and an acid, latent hardening agent.

2. A binder according to Claim 1, characterized in that from 5 to 25% by weight, relative to the resin content, is hardener component.

3. A binder according to Claims 1 and 2, characterized in that the ratio of hexamethylenetetramine to acid, latent hardening agent is in the range of from 30 : 1 to 1 : 2.

4. A binder according to Claims 1 to 3, characterized in that the acid, latent hardening agent is an adduct of a strong acid and urea.

5. A binder according to Claim 4, characterized in that the acid, latent hardening agent is an adduct of a strong acid and hydroxyethylaniline.

6. A binder according to Claims 1 to 3, characterized in that the acid, latent hardening agent is a salt of a strong acid and a weak base.

**7.** A binder according to Claims 1 to 3, characterized in that the acid, latent hardening agent is a heavy-metal salt of an aromatic sulphonic acid.

**8.** A binder according to Claims 1 to 3, characterized in that the acid, latent hardening agent contains a polyol and/or an hydroxypolyester.

**9.** A binder according to Claims 1 to 3, characterized in that the acid, latent hardening agent is an adduct of a strong inorganic or organic acid and a polyol and/or an hydroxypolyester.

**10.** A binder according to Claims 1 and 2, characterized in that the phenol resol has a content of free phenol compounds of less than 5%.

**11.** Use of the binder according to Claims 1 to 10 for the preparation of cores and moulds in the field of foundry work.

**Revendications**

**1.** Liant thermodurcissable obtenu à partir de résine phénolique et de durcisseur, caractérisé en ce que la résine phénolique est un résol phénolique ayant un rapport molaire entre les composés phénoliques et le formaldéhyde de 1 : 1-2 et le durcisseur est un mélange d'hexaméthylènetétramine avec un agent durcisseur acide latent.

**2.** Liant selon la revendication 1, caractérisé en ce que 5-25% en poids, rapportés à la teneur en résine, sont constitués par un durcisseur.

**3.** Liant selon les revendications 1 et 2, caractérisé en ce que le rapport hexaméthylènetétramine : agent durcisseur acide latent se situe dans le domaine de 30:1 à 1:2.

**4.** Liant selon les revendications 1 à 3, caractérisé en ce que l'agent durcisseur acide latent est un produit d'addition obtenu à partir d'un acide fort et d'urée.

**5.** Liant selon la revendication 4, caractérisé en ce que l'agent durcisseur acide latent est un produit d'addition à partir d'un acide fort et d'hydroxyéthylaniline.

**6.** Liant selon les revendications 1 à 3, caractérisé en ce que l'agent durcisseur acide latent est un sel obtenu à partir d'un acide fort et d'une base faible.

**7.** Liant selon les revendications 1 à 3, caractérisé en ce que l'agent durcisseur acide latent est un sel de métal lourd d'un acide sulfonique aromatique.

**8.** Liant selon les revendications 1 à 3, caractérisé en ce que l'agent durcisseur acide latent contient un polyol et/ou un hydroxypolyester.

**9.** Liant selon les revendications 1 à 3, caractérisé en ce que l'agent durcisseur acide latent est un produit d'addition obtenu à partir d'un acide minéral ou organique fort et d'un polyol et/ou d'un hydroxypolyester.

**10.** Liant selon les revendications 1 et 2, caractérisé en ce que le résol phénolique possède une teneur en composés phénoliques libres inférieure à 5%.

**11.** Utilisation des liants selon les revendications 1 à 10 pour la fabrication de noyaux et de moules dans le domaine de la fonderie.